(19)

Europäisches Patentamt

European Patent Office

Office européen des brevets

(11) **EP 2 654 431 B1**

(12) **EUROPEAN PATENT SPECIFICATION**

(45) Date of publication and mention
of the grant of the patent:
**02.10.2019 Bulletin 2019/40**

(21) Application number: **11850660.9**

(22) Date of filing: **22.12.2011**

(51) Int Cl.:
*A01N 59/16* ^(2006.01)      *D06M 11/83* ^(2006.01)
*A01P 1/00* ^(2006.01)      *A61H 39/04* ^(2006.01)

(86) International application number:
**PCT/US2011/066726**

(87) International publication number:
**WO 2012/088377 (28.06.2012 Gazette 2012/26)**

(54) **ANTIMICROBIAL COLLOIDAL SILVER AND GOLD PRODUCTS**

ANTIMIKROBIELLE PRODUKTE AUS KOLLOIDALEM SILBER UND GOLD

PRODUITS ANTIMICROBIENS À BASE D'ARGENT ET D'OR COLLOÏDAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.12.2010 US 201061426614 P**

(43) Date of publication of application:
**30.10.2013 Bulletin 2013/44**

(73) Proprietor: **Eco Product Group LLC
Pittsburgh, PA 15237 (US)**

(72) Inventors:
• **HARRIS, Franco Dokmanovich
Pittsburgh, PA 15201 (US)**

• **DAVIS, Thomas P.
Wexford, PA 15090 (US)**
• **HARRIS, Franco
Sewickley, PA 15143 (US)**

(74) Representative: **Hoarton, Lloyd Douglas Charles
Forresters IP LLP
Skygarden
Erika-Mann-Strasse 11
80636 München (DE)**

(56) References cited:
**WO-A2-2007/098050      KR-B1- 100 919 137
US-A- 1 577 608      US-A1- 2007 224 288
US-A1- 2007 267 029      US-A1- 2010 068 296
US-B1- 7 641 912**

**Description**

**FIELD OF THE INVENTION**

The present invention is related generally to the field of antimicrobial products, and in particular antimicrobial gel, foam, fabric, coated paper, and polymer products having colloidal silver or gold additives.

**BACKGROUND OF THE INVENTION**

In the areas of physical fitness and personal hygiene, the current technology has not addressed the need for substantially sterile surfaces on physical fitness equipment, facilities, and areas where a user's personal items are placed. Those surfaces can be soft or hard, made of gelatinous, foam, coated paper, fabrics or polymer materials, and permanent or temporary or removable.
US 2007/224288 discloses an antibacterial gel coating and pedicure spa with antibacterial function.
KR100919137 discloses a footwear insole with antibiotic function.

**SUMMARY OF THE INVENTION**

One aspect of the present invention includes gelatinous or foam materials combined with the Colloidal Silver or Gold additive to formulate an antimicrobial product having cushioning properties. The present invention provides an antimicrobial colloidal product as claimed. For a better understanding of the present invention, together with other and further objects thereof, reference is made to the accompanying drawings and detailed description.

**BRIEF DESCRIPTION OF THE DRAWINGS**

The present invention is illustratively shown and described in reference to the accompanying drawings, in which:

FIG. 1 is a top view of an exemplary embodiment of a flat mat of the present invention, which has a top surface with a plurality semi-circular projections arranged in rows on a flat surface;

FIG. 2 is a end view of the exercise pad of FIG. 1;

FIGS. 3 and 4 are perspective views of an embodiment of the flat mat of FIG. 1;

FIG. 5 is an end view of the flat mat of the embodiment of FIG. 1 rolled with ends attached thereto;

FIG. 6 is a perspective view of the roller flat mat of FIG. 5 rotated in a counter-clockwise position;

FIG. 7 is a perspective view of the roller flat mat of FIG. 5 rotated in a clockwise position;

FIG. 8 is a side view of the roller flat mat of FIG. 5;

FIG. 9 is a perspective view of another embodiment of the present invention for an exercise roller, which has an outer surface with a plurality semi-circular projections arranged in rows and an insert therein having opposing ends without semi-circular projections;

FIG. 10 is a perspective view of the exercise roller of FIG. 9 rotated counter-clockwise;

FIG. 11 is an end view of the exercise roller of FIG. 9;

FIG. 12 is a side view of the exercise roller of FIG. 9;

FIG. 13 is a side view of another embodiment of the present invention for an exercise roller, which has an outer surface with a plurality of semi-circular projections arranged in rows and an insert therein having semi-circular projections in proximity of the outer edges of the present invention;

FIG. 14 is an end view of the exercise roller of FIG. 13;

FIG. 15A is a side view of the present invention in the form of a flat mat without a plurality of semi-circular projections arranged in rows;

FIG. 15B is a perspective view of the flat mat of FIG. 15A;

FIGS. 16A is a side view of the flat mat in the form of a block without a plurality of semi-circular projections arranged in rows;

FIG. 16B is a perspective view of the block of FIG. 16A;

FIG. 17 is a perspective view of the present invention in the form of a Pilates mat with a plurality of semi-circular projections arranged in rows;

FIG. 18A is a top view of an alternative embodiment of a flat mat illustrating an alternative projection with a square base section having side that rise to form a semi-circular top section; and

FIG. 18B is a side view of the alternative embodiment of FIG. 18A; and

FIG. 19 is a perspective view of an alternative embodiment shaped in the form of a wedge;

FIG. 20A is a top view of an antimicrobial towel; and

FIG. 20B is an isometric view of the embodiment of FIG. 20A;

FIG. 21A is a top view of an antimicrobial tray for food, personal hygiene items, or personal instruments; and

FIG. 21B is an isometric view of the alternative embodiment of FIG. 21A.

FIG. 22A is a top view of a rectangular antimicrobial sheet;

FIG. 22B is an isometric view of the embodiment of FIG. 22A;

FIG. 23A is a top view of an oval antimicrobial sheet;

FIG. 23B is an isometric view of the alternative embodiment of FIG. 23A;

FIG. 24A is a top view of an antimicrobial bench liner;

FIG. 24B is an isometric view of the alternative antimicrobial bench liner of FIG. 24A;

FIG. 25A-B is a top view of an antimicrobial chair arm liner;

FIG. 25C-D is an isometric view of the alternative antimicrobial chair arm liner of FIG. 25A-B, respectively;

FIG. 26A is a top view of an antimicrobial drawer liner;

FIG. 26B is an isometric view of the alternative antimicrobial drawer liner of FIG. 26A;

FIG. 27A is a top view of an antimicrobial place mat;

FIG. 27B is an isometric view of the alternative antimicrobial place mat of FIG. 27A;

FIG. 28A is a front view of an antimicrobial seat back cover;

FIG. 28B is a top view of an antimicrobial seat bottom cover;

FIG. 28C is an isometric view of the alternative antimicrobial seat covers of FIG. 28A-B;

FIG. 29A-B is a top view of an antimicrobial shower liner;

FIG. 30A-B is a top view of antimircrobial table clothes;

FIG. 30C-D is an isometric view of the alternative antimicrobial seat covers of FIG. 30A-B, respectively; and

FIGS. 31A-B are pictorial views of one embodiment of the non-hemispheric spherical cap projection of the present invention.

## DETAILED DESCRIPTION OF THE INVENTION

The phrase "cross-linked network" means the one polymer chain is linked or bonded to another polymer chain.

The phrase "monolithic structure" means a solid, single part and not an assembly of two or more components.

The phrase "comprehensively suspended colloidal silver or gold" means silver or gold particulates are suspended evenly throughout the gel or foam, coated paper, fabric or other polymer material or suspended unevenly but along a target surface, such as the outer surface, of the gel or foam, coated paper, fabric or other polymer material, all of which provides sufficient antimicrobial protection for its intended purpose.

According to the present invention a gelatinous material has a colloidal silver additive (alternatively, a colloidal gold additive) suspended substantially evenly within the gelatin material. The colloidal silver additive concentration is about 200 to about 2000 PPM depending on customer bacteria kill percentage requirements. The gelatinous material can either be a thermosetting polymer, Styrene-Ethylene-Butadiene-Styrene polymer (SEBS), Thermoplastic Elastomer (TPE), or Polyurethane (PU) gelatin. The thermo-reversible solid material is composed of a liquid organic phased entrapped in a three-dimensionally cross-linked network. The solubility of the liquid organic can add elasticity to a product creating a jelly-like substance or gelatinous material. The combination of organic material plus SEBS material creates a thermoplastic elastomer. The polymers will be used in a final form in hardness and softness are harder consistencies on the Shore DD Scale 80. According to the invention the gelatinous material is:

Substance A: Polymeric Methylene diphenyl di-isocyanate (MDI) 100%;

Substance B: 265 Molecular weight (Mw) polyether triol 100%;

Ratio A:B about 1:1;

Shore D about 80; and

Anti-microbial Colloidal silver or gold concentration of about 200 to about 2000 PPM.

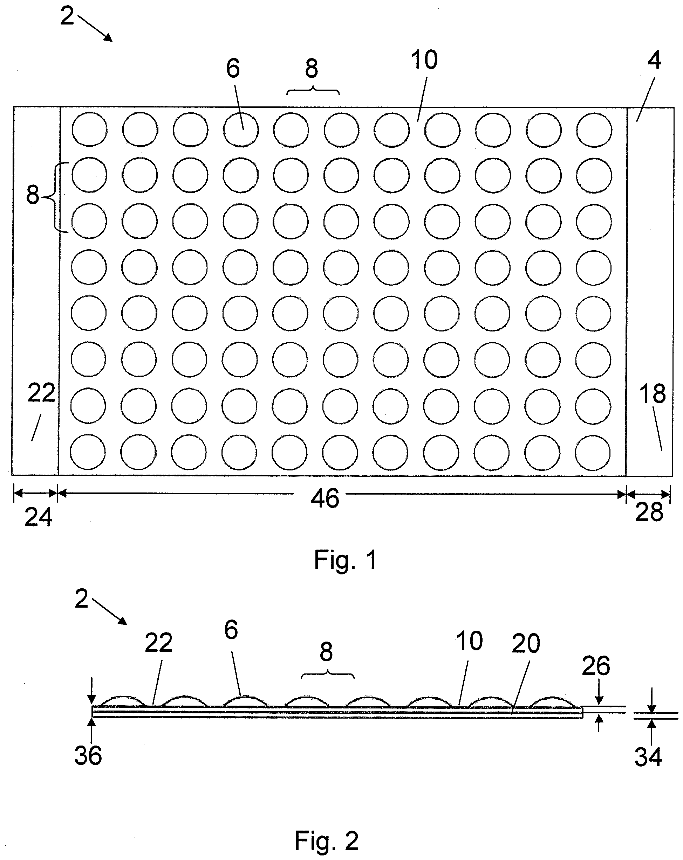

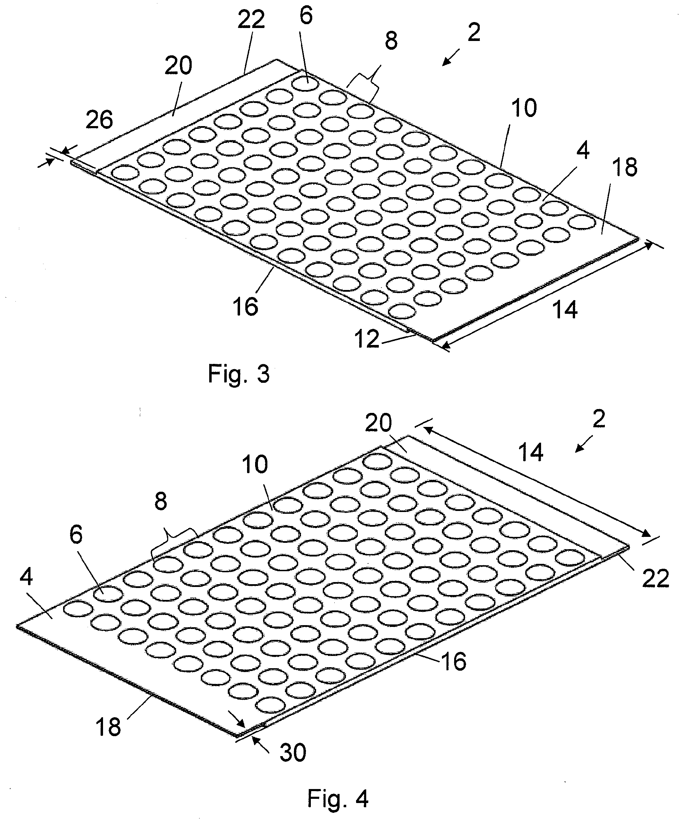

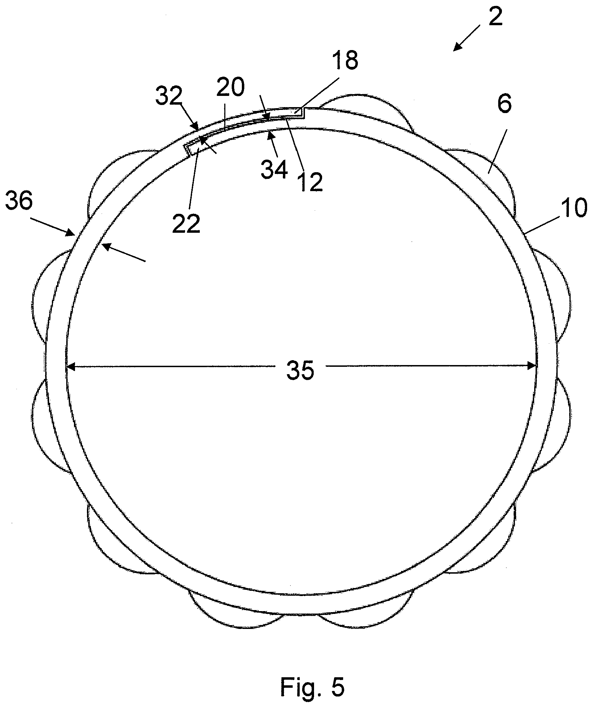

One embodiment of the present invention is illustrated in FIGS. 1-8 illustrates a flat mat 2 and examples of its possible adaptable configurations. FIG. 1 is a top view of an exemplary embodiment being a flat mat 2 of the present invention; which has a top surface 4 with a plurality of semi-circular or non-hemispheric spherical cap projections 6 arranged in rows 8 on a flat surface 10. FIG. 2 is an end view of the flat mat 2 of FIG. 1. FIGS. 3 and 4 are perspective views of an embodiment of flat mat 2 of FIG. 1 illustrating cutout 12 along width 14 of bottom surface 16 at end 18 and cutout 20 along width 14 of top surface 10 at opposing end 22. FIGS. 3 and 4 illustrate top surface cutout 20 having length 24 and depth 26 substantially the same dimensions as bottom surface cutout 12 with length 28 and depth 30, respectively, such that when flat mat 2 is rolled into a substantially circular form having a diameter 35, as shown in FIG. 5, end 18 and opposing end 20 are received into top surface cutout 20 and bottom surface cutout 12, respectively. Another acceptable embodiment of ends 18, 22 is any combination of cutout depths 26, 30 or end thicknesses 32, 34 with a sum total thickness approximately equivalent to flat mat thickness 36. Ends 18, 22 are removably attachable by any suitable attachment mechanism such as hook/loop, adhesive, male/female snaps, and clamps such that a first end attachment mechanism cooperates with a second end attachment mechanism to hold end 18 and opposing end 22 together.

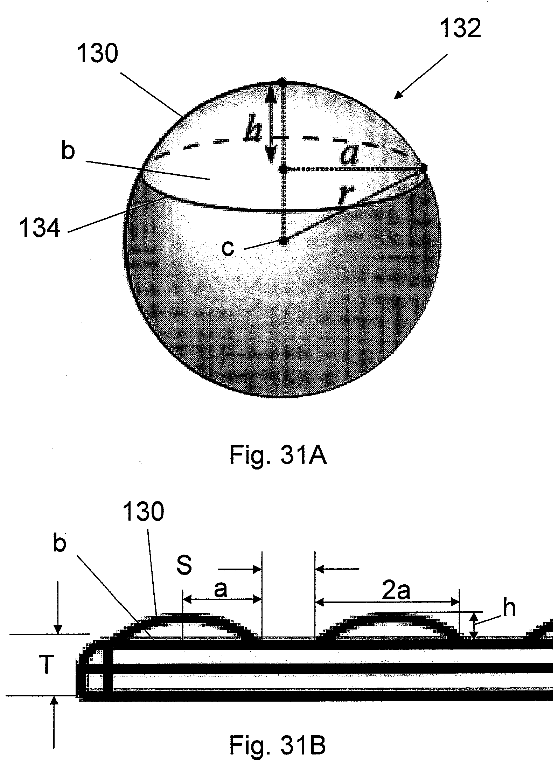

With regards to non-hemispheric spherical cap projections 6, a spherical cap 130 as shown in FIG. 31 is a portion of a sphere 132 cut off by a plane 134. If the plane 134 passes through the center of the sphere, so that the height h of the cap 130 is equal to the radius r of the sphere 132, then the spherical cap 130 is called a hemisphere. If the plane 134 does not pass through the center c of the sphere 132, so that the height h of the cap 130 is not equal to the radius r of the sphere 132, then the spherical cap 130 is a non-hemisphere.

If the radius of the sphere is r, the radius of the base b (along plane 134) of the cap is a, and the height of the cap is h, then the volume of the spherical cap is:

$$V = \frac{\pi h}{6}(3a^2 + h^2),$$

and the curved surface area of the spherical cap is:

$$A = 2\pi rh.$$

The parameters a, h and r are not independent:

$$r^2 = (r - h)^2 + a^2 = r^2 + h^2 - 2rh + a^2,$$

$$r = \frac{a^2 + h^2}{2h}.$$

Substituting this into the area formula gives:

$$A = 2\pi\frac{(a^2 + h^2)}{2h}h = \pi(a^2 + h^2).$$

Note also that in the upper hemisphere of the diagram, $h = r - \sqrt{r^2 - a^2}$, and in the lower hemisphere $h = r + \sqrt{r^2 - a^2}$; hence in either hemisphere $a = \sqrt{h(2r - h)}$ and so an alternative expression for the volume is

$$V = \frac{\pi h^2}{3}(3r - h).$$

Now returning to FIG. 31B that illustrates pad thickness T, the spacing S between projections, height h, radius a of the base b, where 2a is the diameter of base b. Spacing S and height h are both less than radius a of the base b, where 2a is the diameter of base b.

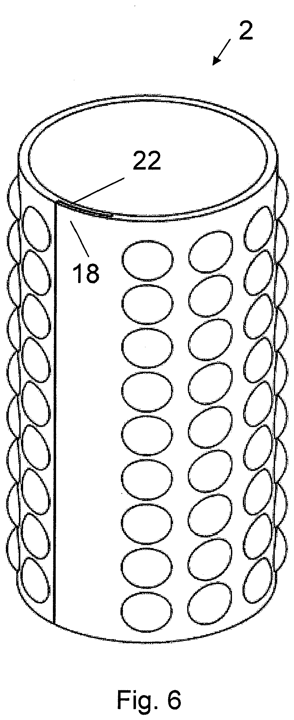

FIG. 6 is a perspective view of the flat mat 2 in a rolled configuration as illustrated in FIG. 5 rotated in a counter-clockwise position.

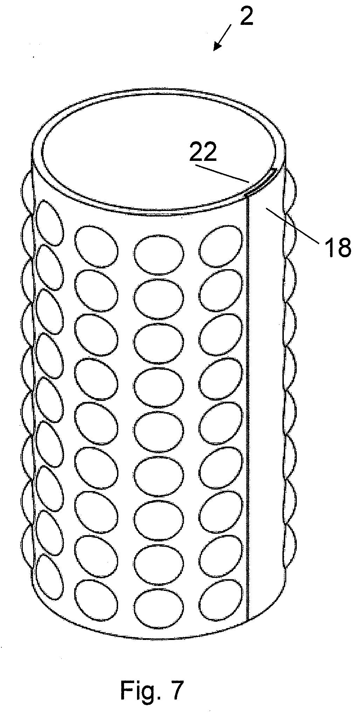

FIG. 7 is a perspective view of the flat mat 2 in a rolled configuration as illustrated in FIG. 5 rotated in a clockwise position.

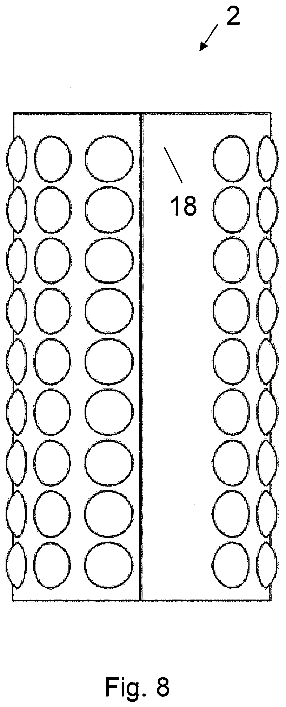

FIG. 8 is a side view of the flat mat 2 in a rolled configuration as illustrated in FIG. 5.

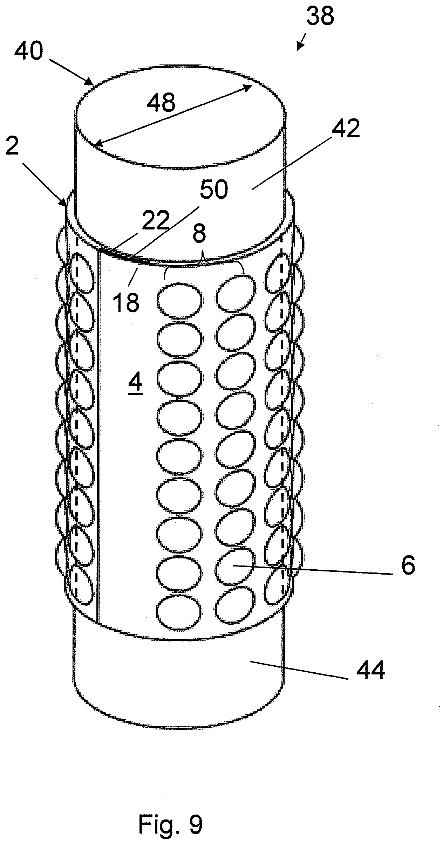

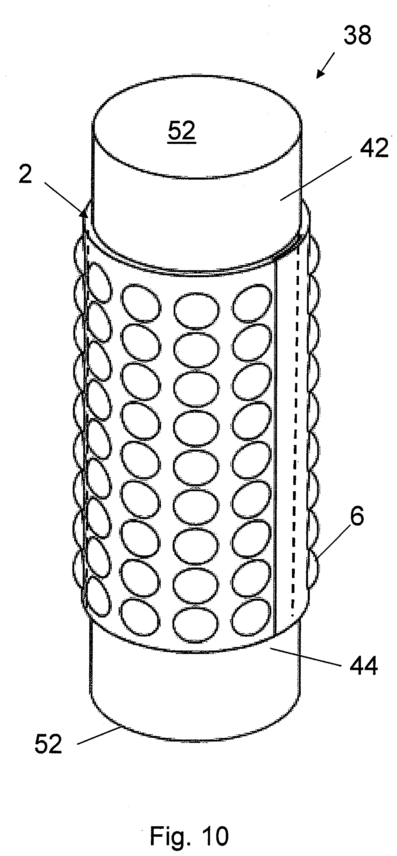

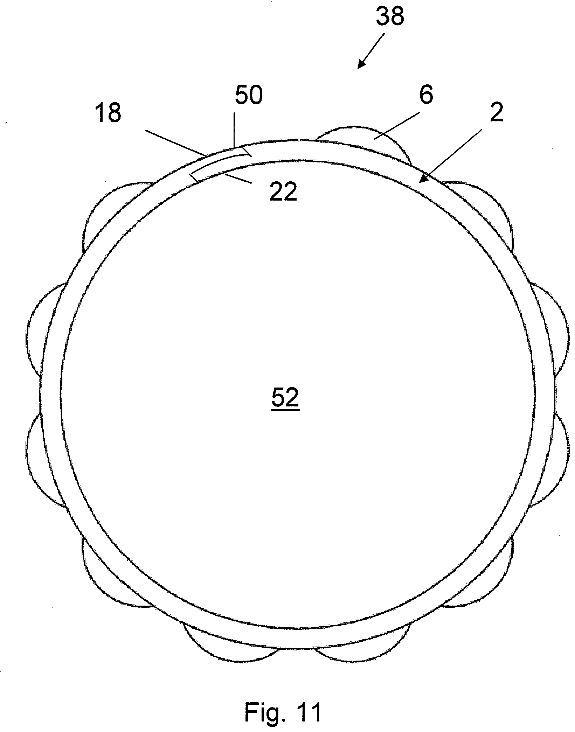

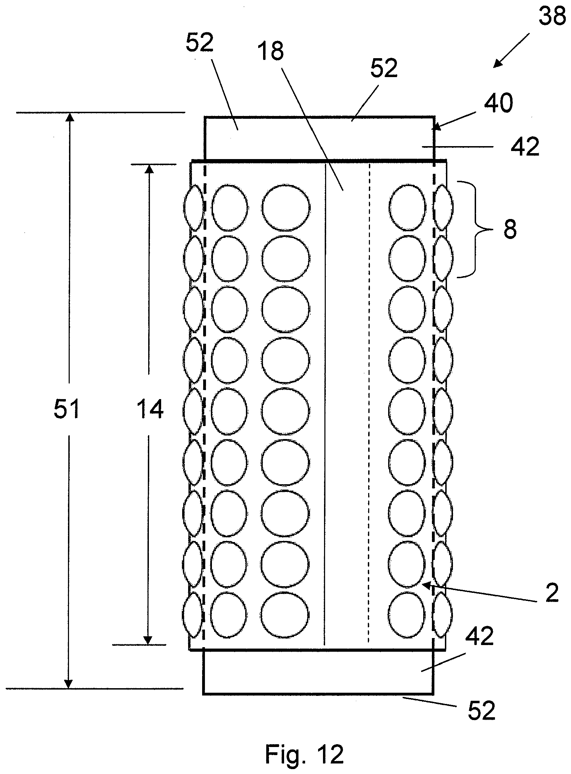

Another embodiment of the present invention is an exercise roller 38 illustrated in FIGS. 9-12 showing flat mat 2 wrapped around an insert 40 connecting at overlapping end section 50 of ends 18, 22 and the end attachment mechanisms are engaged to enclose insert 40 within flat mat 2. FIG. 9 is a perspective view of embodiment 38 of the present invention, which has an top or outer surface 4 with a plurality semi-circular projections 6 arranged in rows 8 and an insert 40 therein having opposing ends 42, 44 without semi-circular or non-hemispheric spherical cap projections 6. FIG. 10 is a perspective view of exercise roller 38 of FIG. 9 rotated counter-clockwise. FIG. 11 is an end view of exercise roller 38 of FIG. 9 showing end surface 52. FIG. 12 is a side view of exercise roller 38 of FIG. 9 illustrating length 51 of insert 40 relative to width 14 of flat mat 2. Insert 40 can be constructed of foam or styro-foam. Diameter 48 of insert 40 is substantially equivalent to length 46 of semi-circular projection portion of flat mat 2 (see FIG. 1) plus overlapping end section 50, which is the longer of either top surface cutout length 24 or bottom surface cutout length 28, or diameter 35. Length 51 of insert 40 can be substantially equal to or greater than width 14 of flat mat 2. FIG. 12 illustrates length 51 being greater than width 14. The embodiment where length 51 equals width 14, which effectively eliminates opposing ends 42, 44 without semi-circular projections 6, such that ends 52 are substantially adjacent to semi-circular projections 6.

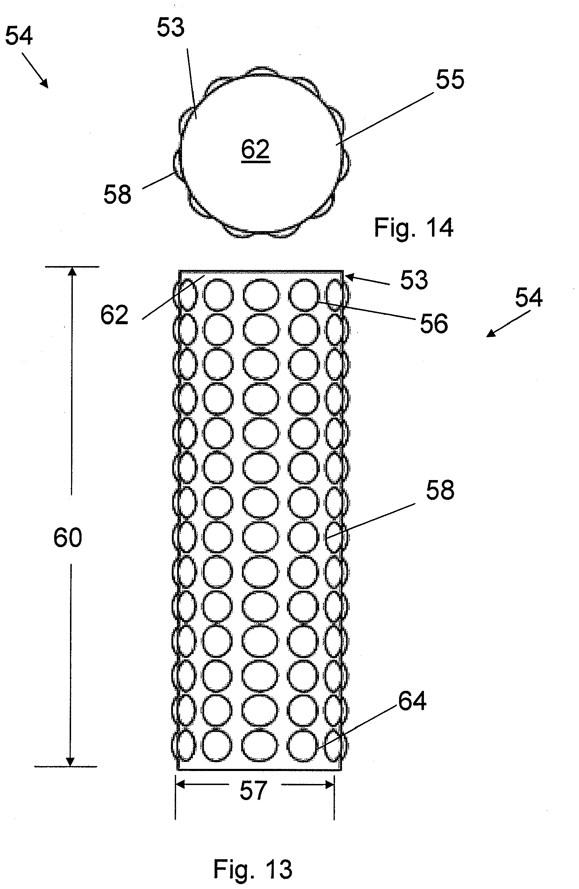

Yet another embodiment of the present invention is a monolithic exercise roller 54 illustrated in FIGS. 13-14 showing a cylinder 53 having diameter 57 that can be constructed of foam, styro-foam, TPE, SEBS, PU and Urethane Gels, as well as silicone materials, with Colloidal Silver additives suspended therein. Outer surface 56 of cylinder 53 has raised geometry 58 that traverses the entire circumference 55 in various dimensional shapes and designs including but not limited to raised semi-circular bumps or projections as shown in FIGS. 13-14 in close proximity of and adjacent to the outer edges 62, 64. This monolithic structure eliminates the need to wrap a substrate with the Colloidal Silver suspended therein around the perimeter of the cylinder.

Yet another embodiment of the present invention is a monolithic exercise roller 54 illustrated in FIGS. 13-14 showing a cylinder 53 having diameter 57 that can be constructed of foam, styro-foam, TPE, SEBS, PU and Urethane Gels, as well as silicone materials, with Colloidal Silver additives suspended therein. Outer surface 56 of cylinder 53 has raised geometry 58 that traverses the entire circumference 55 in various dimensional shapes and designs including but not limited to raised semi-circular bumps or projections as shown in FIGS. 13-14 in close proximity of and adjacent to the outer edges 62, 64. This monolithic structure eliminates the need to wrap a substrate with the Colloidal Silver suspended therein around the perimeter of the cylinder.

Examples of flat mat 2 can have total lengths defined as the sum of top surface cutout length 24, bottom surface cutout length 28, and semi-circular projection portion length 46 about 46-66 cm (18 to 26 inches). Flat mat 2 can have widths about 36-102 cm (14 to 40 inches). However, lengths and widths longer or shorter are acceptable.

Examples of the exercise rollers 38, 54 can have lengths about 36-102 cm (14 to 40 inches) and diameters about 15-20 cm (6 to 8 inches). However, lengths longer or shorter and diameters larger or smaller are acceptable.

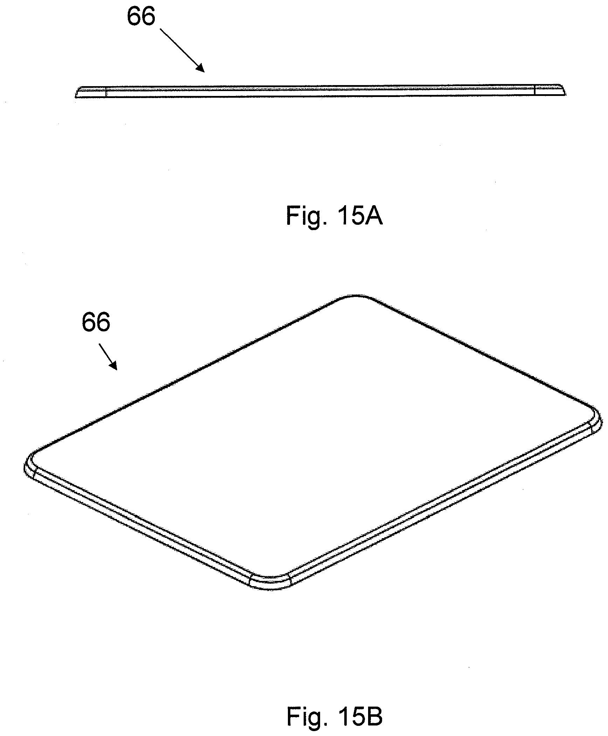

FIG. 15A is a side view of the present invention in the form of a flat mat 66 without a plurality of semi-circular projections arranged in rows. FIG. 15B is a perspective view of the flat mat 66.

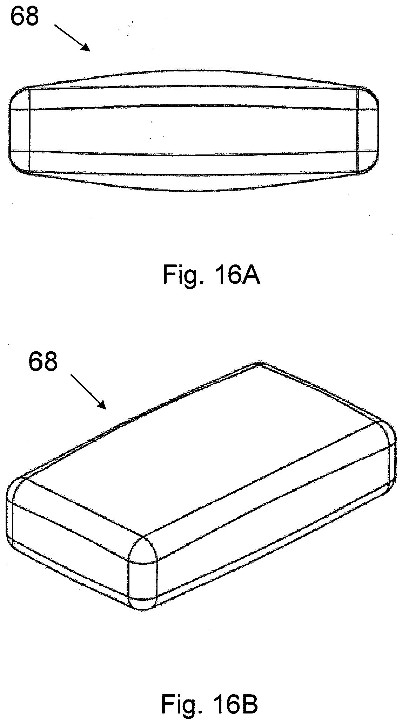

FIGS. 16A is a side view of the present invention in the form of a block 68 without a plurality of semi-circular projections arranged in rows. FIG. 16B is a perspective view of the block 68. An alternative embodiment of block 68 can include a plurality of semi-circular projections arranged in rows.

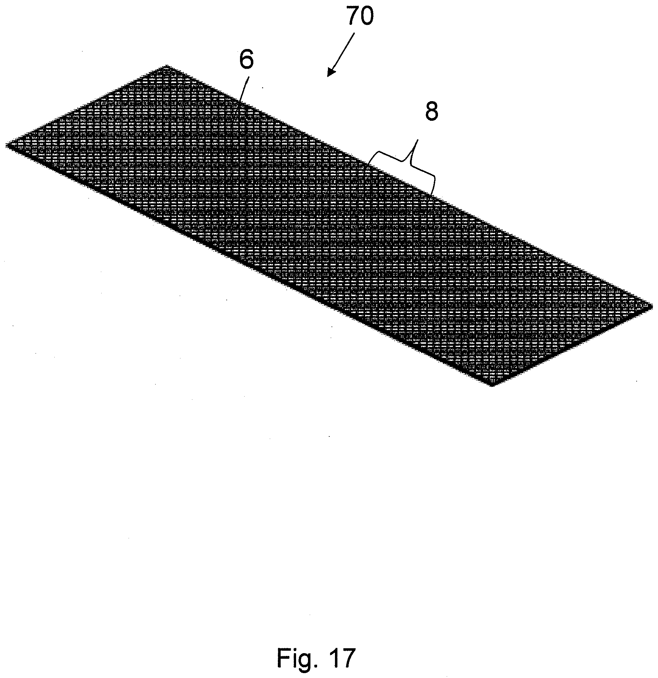

FIG. 17 is a perspective view of the present invention in the form of a Pilates mat 70 with a plurality of semi-circular projections 6 arranged in rows 8.

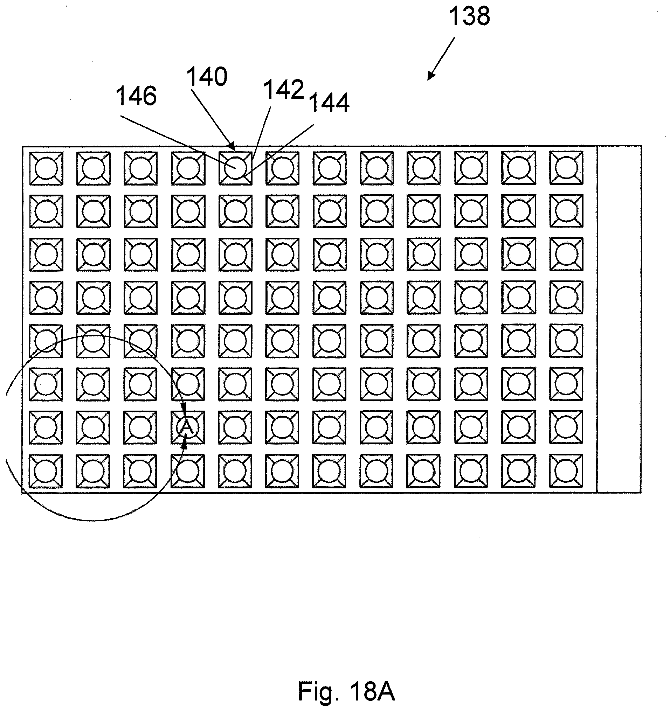

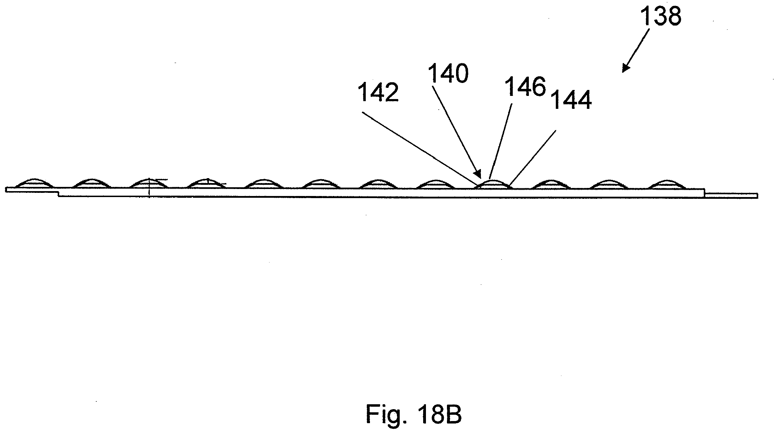

FIGS. 18A-B illustrate an alternative embodiment illustrating an alternative mat 138 with projections 140 having a square base section 142 with sides 44 that rise upward to blend with a semi-circular top section 146.

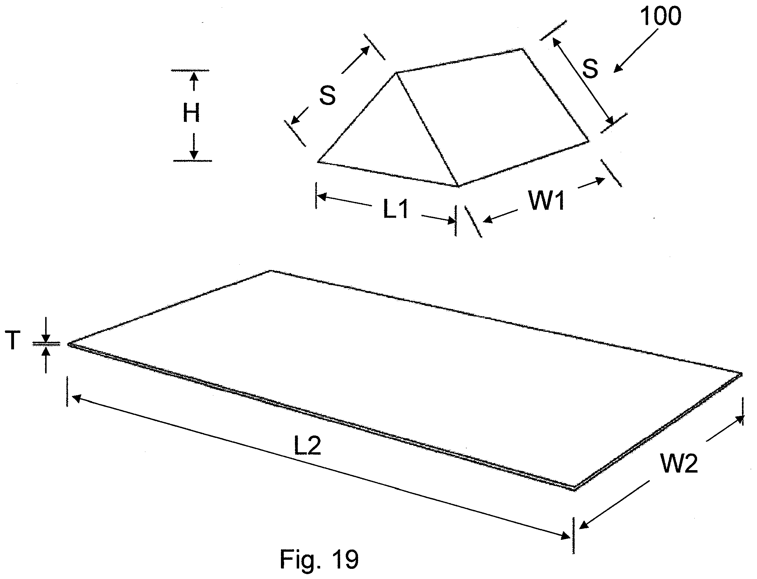

FIG. 19 illustrates a wedge-shaped exercise device 100 that can be made of the gelatinous material disclosed above or any commercially available foam product. Wedge-shaped exercise device 100 can have any width W1, sides S, length L1, and height H. Wedge-shaped exercise device 100 is shown in Fig. 19 elevated over exercise mat 102 having width W2, length L2, and thickness T. An example of a wedge-shaped exercise devices 100 has W1= 46 cm (18 inches), S = 30 cm (12 inches), L = 36 cm (14 inches). An example of an accompanying exercise mat 102 has W2 = 56 cm (22 inches), L2 = 173 cm (68 inches), T = 1 cm (3/8 inches).

Yet another antimicrobial colloidal silver product according to the present invention is a shoe insert (not shown).

Alternative embodiments of the present invention for all products can be capability of generating heating. The products can be microwaveable or include induction heating elements power by AC or DC sources. The induction heating elements can either be embedded within the gel material of the formed product or attached to an outer surface of the formed product. The maximum temperature of the heating element is less than the boiling point of material, depending on the composition of the gel material.

Further alternative embodiments of the present invention for all products can be capable of being cooled to greater than the freezing point of the gel material such that the properties of malleability and cushioning are still present. The freezing point ranges depends on the composition of the gel material. The product can be place in the refrigerator or freezer to achieve the desired cooling temperature.

Embodiments of the present invention can be formed from of other polymer materials with silver or gold additives for creating bacteria-free anti-microbial areas in multi-use or multi-person facilities, such as gyms, hotels, food courts, restaurants, cruise ships. The various embodiments include coated polymer sheets, polymer trays, bamboo and/or cotton towels and fabric, polymer foam, or polymer mats containing nano-silver or nano-gold.

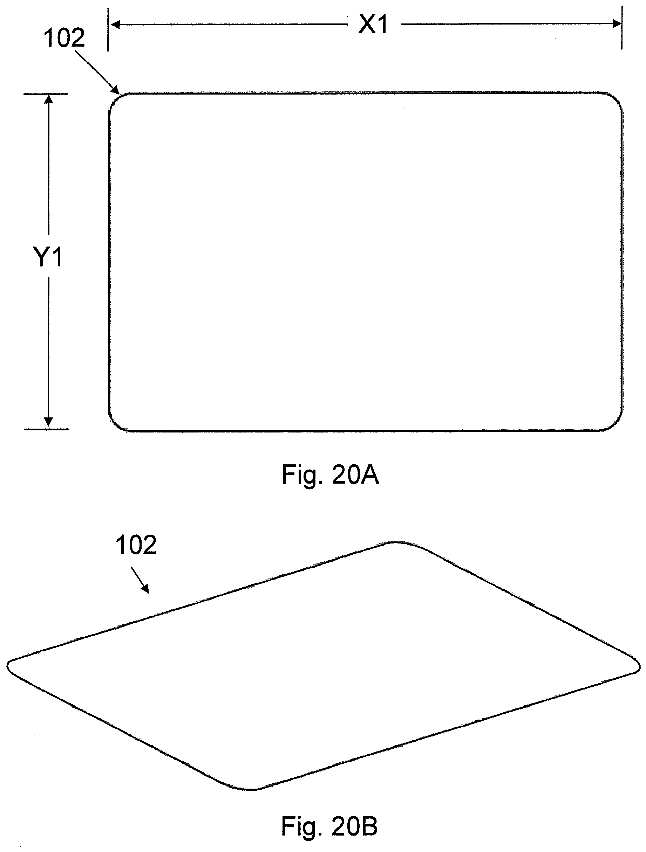

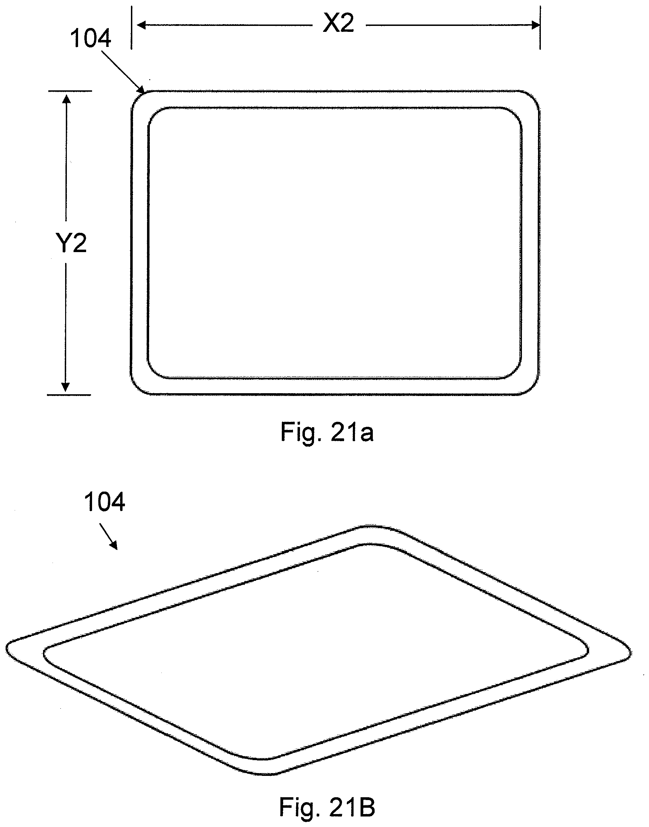

Not according to the present invention there is a physical surface that can kill existing bacteria and / or prevent the growth of new bacteria. This surface is made of either natural fibers, man-made fibers, or polymers and is treated with an anti-microbial, in particular nano-silver particles, that are either added to the polymer directly, added to the dye used in the production of the natural fiber products, or added to a coating which is then used to coat the natural fiber, man-made fibers, or polymer products. The present invention embodiment may be designed in a number of shapes and sizes (see Figs. 20A-B, 22A-B, 23A-B), and may resemble, but are not limited to traditional items such as bath mats, rugs, towels, fabrics, shower curtains, bed linens, drawer liners, bag and luggage liners, trays (see Figs. 21A-B), place mats, and tablecloths. The present invention embodiment may also be in the form of polymer sheets similar to pieces of paper with or without adhesive on one side for use. The silver or gold concentration of any embodiment formulations of the embodiments disclosed herein are about 200 to about 2000 PPM. For example:

Anti-microbial towels 102 can be made from bamboo, cotton, and/or polyester with industrial dye mixed with nano-silver or gold in a concentration about 200 to about 2000 PPM in the dye. FIGS. 20A-B illustrate the general rectangular shape of the towel 102 having a length X1 and width Y1, wherein the length, width, and thickness (not shown) can be any dimensions to meet customer or user requirements.

Anti-microbial food tray 104 can be made of a polypropylene with colorants mixed with nano-silver or gold in a concentration about 200 to about 2000 PPM in the colorants. FIGS. 21A-B illustrate the general rectangular shape, of the tray 104 having a length X2 and width Y2, wherein the length, width, and thickness (not shown) can be any dimensions to meet customer or user requirements.

Liners 106, 108 for items including but not limited to bags or dresser or cabinet drawers includes coated polyester paper stock including nano-silver or gold in a concentration about 200 to about 2000 PPM blended with a resin solution and coated onto the polyester to form a layered anti-microbial structure on the paper stock.

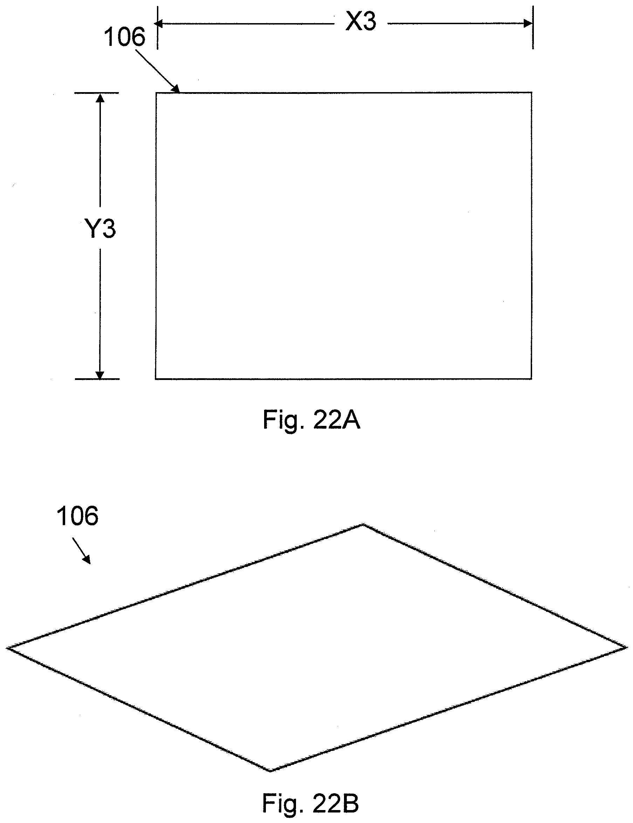

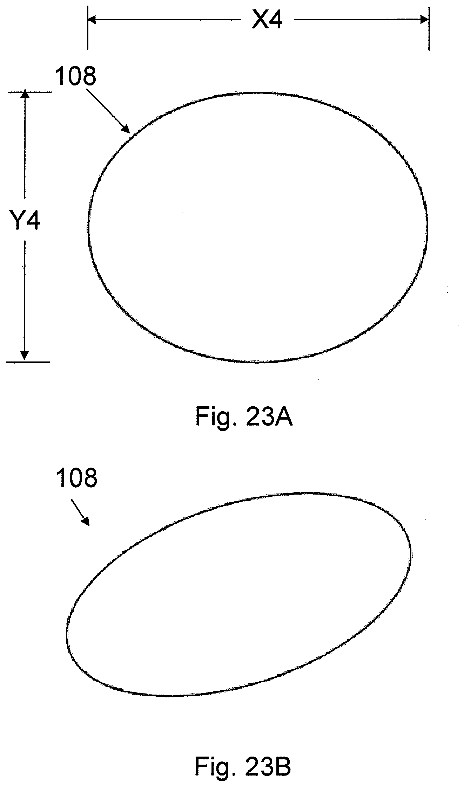

FIGS. 22A-B and 23A-B illustrate the general rectangular and oval shapes, respectively, of the polyester coated paper stock, liners, and other present invention embodiment 106, 108 having lengths X3, X4 and widths Y3, Y4, respectively, wherein the length, width, and thickness (not shown) can be any dimensions to meet customer or user requirements.

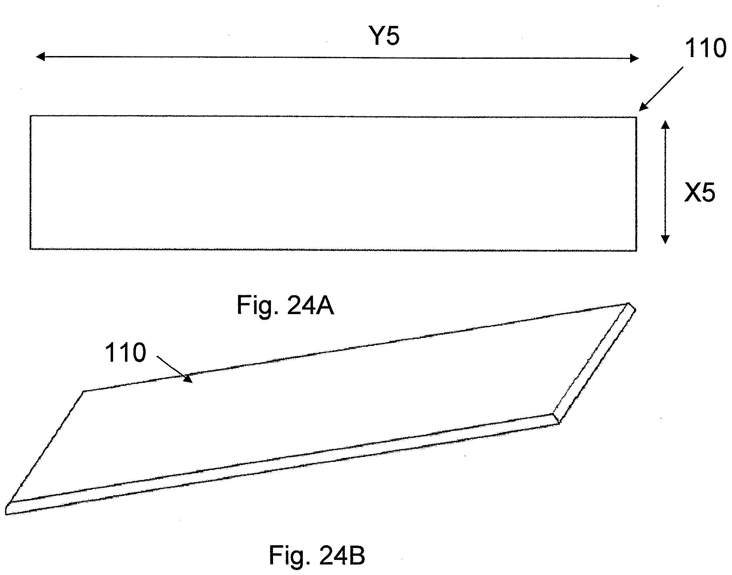

FIGS. 24A-B illustrate the general rectangular shape of a bench of another embodiment of the present invention embodiment 110 having a length X5 and a width Y5 wherein the length, width, and thickness (not shown) can be any dimensions to meet customer or user requirements.

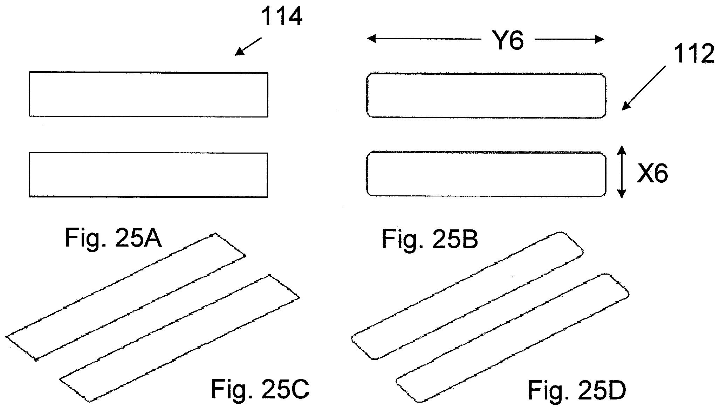

FIGS. 25A-B and 25C-D illustrate the general rectangular shapes of a chair arm liners of another embodiment of the present invention embodiment 112, 114 having lengths X6 and widths Y6, respectively, wherein the length, width, and thickness (not shown) can be any dimensions to meet customer or user requirements. The corners of chair arm liners 112 are rounded. The corners of chair arm liners 114 are square.

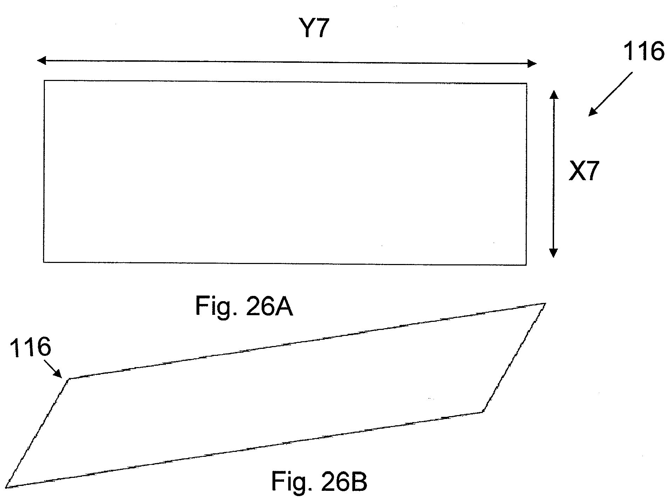

FIGS. 26A-B illustrate the general rectangular shape of a bench of another embodiment of the present invention embodiment 116 having a length X7 and a width Y7 wherein the length, width, and thickness (not shown) can be any dimensions to meet customer or user requirements.

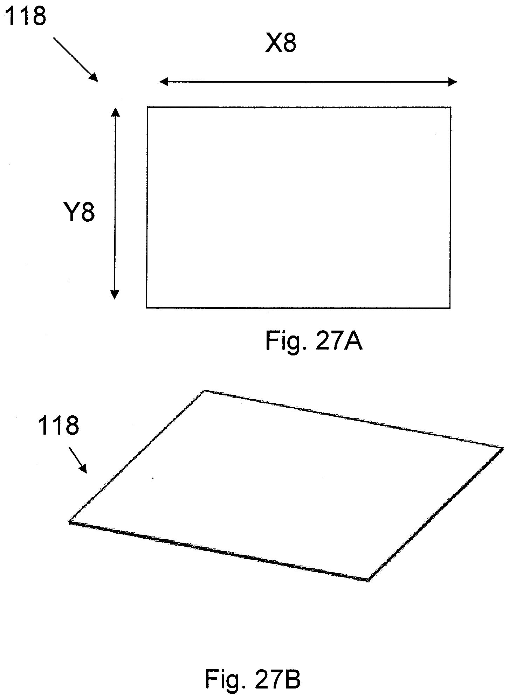

FIGS. 27A-B illustrate the general rectangular shape of a bench of another embodiment of the present invention embodiment 118 having a length X8 and a width Y8 wherein the length, width, and thickness (not shown) can be any dimensions to meet customer or user requirements.

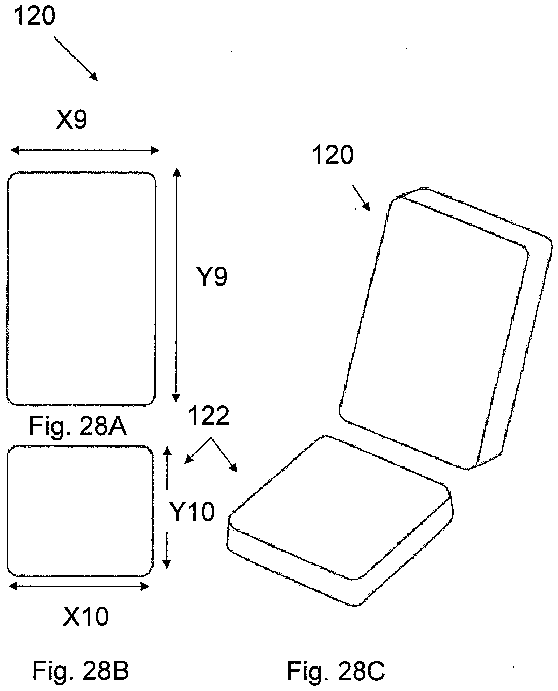

FIGS. 28A-B illustrate the general rectangular shape of a seat back cover and seat bottom cover, respectively, of another embodiment of the present invention embodiment 120, 122 having lengths X9, X10, respectively, and widths Y9, Y10, respectively, wherein the length, width, and thickness (not shown) can be any dimensions to meet customer or user requirements. FIG. 28C is a perspective view of the seat front and seat back relatively placed in position for use.

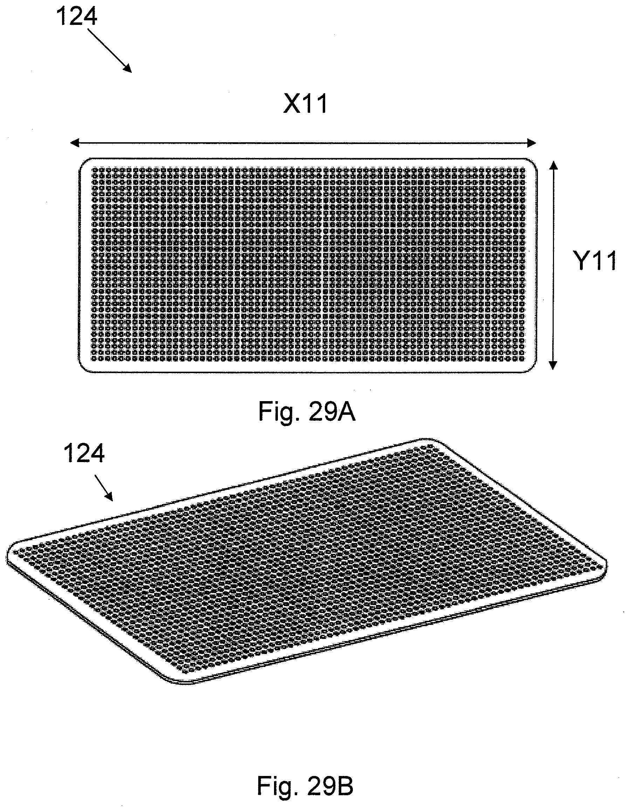

FIGS. 29A-B illustrate the general rectangular shape of a shower liner of another embodiment of the present invention embodiment 124 having a length X11 and a width Y11 wherein the length, width, and thickness (not shown) can be any dimensions to meet customer or user requirements.

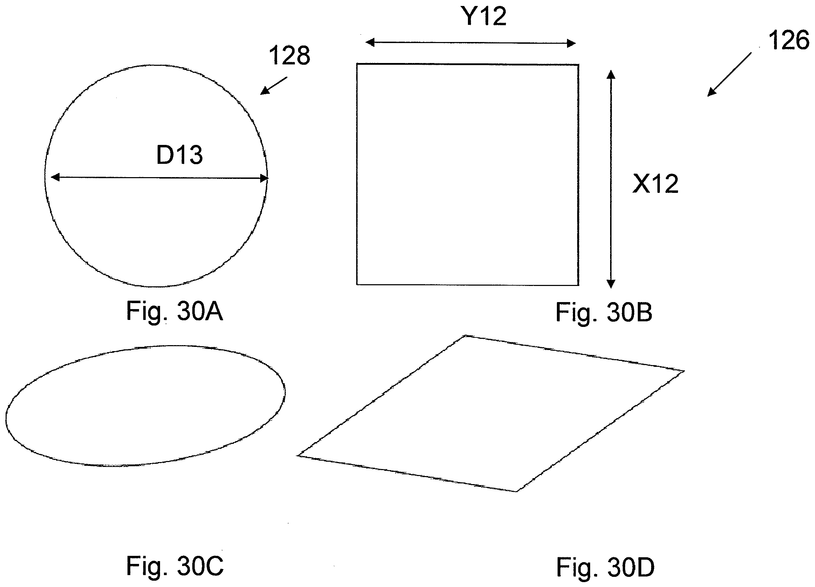

FIGS. 30A-B and 30C-D illustrate the general rectangular and circular shapes, respectively, of the table clothes of another embodiment of the present invention embodiment 126, 128 having a length X12 and a width Y12, and a diameter D13, respectively, wherein the length, width, and thickness (not shown) can be any dimensions to meet customer or user requirements.

While the disclosure has been described in detail and with reference to specific embodiments thereof, it will be apparent to one skilled in the art that various changes and modifications can be made therein without departing from the scope of the claims.

## Claims

1. An antimicrobial colloidal product comprising a gelatinous material with a colloidal silver or gold additive suspended within the gelatinous material, wherein the anti-microbial colloidal silver or gold additive concentration is about 200 to about 2000 PPM and the gelatinous material comprises:

   a polymeric methylene diphenyl di-isocyanate (MDI) 100%; and
   265 molecular weight (Mw) polyether triol 100%;

   wherein a ratio of the polymeric methylene diphenyl di-isocyanate to the polyether triol is about 1:1 and the antimicrobial colloidal product has a Shore D hardness of about 80.

2. The antimicrobial colloidal product according to claim 1, wherein the antimicrobial colloidal product comprises a flat mat having a smooth top surface.

3. The antimicrobial colloidal product according to claim 1, wherein the antimicrobial colloidal product comprises a flat mat having a top surface with a plurality of non-hemispheric spherical cap projections arranged in rows on the top surface.

4. The antimicrobial colloidal product according to claim 3, wherein each non-hemispheric spherical cap projection has a square base section.

5. The antimicrobial colloidal product according to claim 3, wherein the flat mat (2) further comprises:

a first end having a first end cutout with a first end cutout depth along a width of a bottom surface of the flat mat (2), wherein the first end includes a first end thickness; and
a second end that opposes the first end, wherein the second end includes a second end cutout with a second end cutout depth along the width of the top surface of the flat mat, wherein the second end includes a second end thickness,
wherein (i) the first end thickness is substantially equal to the second end cutout depth and (ii) the second end thickness is substantially equal to the first end cutout depth,
whereby (i) the first end thickness is received into the second end cutout depth and (ii) the second end thickness is received into the first end cutout depth when the flat mat (2) is rolled into a substantially circular form such that the flat mat is transformed into a cylinder having an inner diameter.

6. The antimicrobial colloidal product according to claim 5, wherein a sum of the thicknesses of the first end thickness and the second end thickness is approximately equivalent to a flat mat thickness.

7. The antimicrobial colloidal product according to claim 5, wherein the flat mat (2) further comprises attachment mechanisms affixed to a cutout surface of the first end and a cutout surface of the second end, wherein the first end attachment mechanism cooperates with the second end attachment mechanism to hold the first end and the second end together, and preferably, wherein the attachment mechanism are selected from a group consisting of hook/loop, adhesive, male/female snaps, and clamps.

8. The antimicrobial colloidal product according to claim 7, further comprising an insert having an outer diameter substantially equal to the inner cylinder diameter, whereby the flat mat (2) is capable of being wrapped around the insert and the attachment mechanisms are engaged to enclose the insert within the flat mat.

9. The antimicrobial colloidal product according to claim 1, wherein the antimicrobial colloidal product comprises a solid monolithic cylinder without an inner cylinder diameter having an outer surface with a plurality of non-hemispheric spherical cap projections arranged in rows on the outer surface.

10. The antimicrobial colloidal product according to claim 1, wherein the antimicrobial colloidal product comprises a block without a plurality of semi-circular projections arranged in rows.

11. The antimicrobial colloidal product according to claim 3, further comprising a wedge-shaped exercise device made of the gelatinous material.

12. The antimicrobial colloidal product according to claim 1, wherein the antimicrobial colloidal product is capable of generating heat, and preferably wherein the antimicrobial colloidal product is capable of being microwaved, and/or wherein the antimicrobial colloidal product comprises induction heating elements powered by AC or DC sources.

13. The antimicrobial colloidal product according to claim 12, wherein the induction heating elements are embedded within the gelatinous material; OR
wherein the induction heating elements are attached to an outer surface of the antimicrobial colloidal product

14. The antimicrobial colloidal product according to claim 1, wherein the antimicrobial colloidal product is capable of generating cold, preferably wherein the antimicrobial colloidal product is capable of being cooled to greater than the freezing point of the gel material such that the properties of malleability and cushioning are still present, and/or wherein the antimicrobial colloidal product can be placed in a refrigerator or a freezer to achieve a desired cooling temperature, and/or
wherein the antimicrobial colloidal product is selected from a group consisting of coated polymer sheets, polymer trays, polymer foam, and polymer mats.

15. The antimicrobial colloidal product according to claim 1, wherein the antimicrobial colloidal product is a shoe insert, a bath mat, a shower curtain, a shower liner, a drawer liner, a polymer sheet, a polyester coated paper stock, a bag and luggage liner, a tray, or a place mat.

**Patentansprüche**

1. Antimikrobielles kolloidales Produkt, umfassend ein gelatinöses Material mit einem Additiv aus kolloidalem Silber oder Gold, das im gelatinösen Material suspendiert ist, worin die Konzentration des antimikrobiellen Additivs aus kolloidalem Silber oder Gold etwa 200 bis etwa 2000 PPM beträgt und das gelatinöse Material umfasst: ein polymeres Methylendiphenyldiisocyanat (MDI) 100 %; und ein Molekulargewicht (Mw) von 265 aufweisendes Polyethertriol 100 %; worin ein Verhältnis des polymeren Methylendiphenyldiisocyanats zum Polyethertriol etwa 1:1 beträgt und das antimikrobielle kolloidale Produkt eine Shore-D-Härte von etwa 80 aufweist.

2. Antimikrobielles kolloidales Produkt nach Anspruch 1, worin das antimikrobielle kolloidale Produkt eine flache Matte mit einer glatten Oberseite umfasst.

3. Antimikrobielles kolloidales Produkt nach Anspruch 1, worin das antimikrobielle kolloidale Produkt eine flache Matte mit einer Oberseite mit einer Mehrzahl von nicht-halbkugelförmigen sphärischen Kappenvorsprüngen, die in Reihen auf der Oberseite angeordnet sind, umfasst.

4. Antimikrobielles kolloidales Produkt nach Anspruch 3, worin jeder nichthalbkugelförmige sphärische Kappenvorsprung einen quadratischen Basisabschnitt aufweist.

5. Antimikrobielles kolloidales Produkt nach Anspruch 3, worin die flache Matte (2) ferner umfasst:

   ein erstes Ende mit einer ersten Endausnehmung mit einer ersten Endausnehmungstiefe entlang einer Breite einer Unterseite der flachen Matte (2), worin das erste Ende eine erste Enddicke beinhaltet; und
   ein zweites Ende, das dem ersten Ende gegenüber ist, worin das zweite Ende eine zweite Endausnehmung mit einer zweiten Endausnehmungstiefe entlang der Breite der Oberseite der flachen Matte beinhaltet, worin das zweite Ende eine zweite Enddicke beinhaltet,
   worin (i) die erste Enddicke im Wesentlichen gleich der zweiten Endausnehmungstiefe ist und (ii) die zweite Enddicke im Wesentlichen gleich der ersten Endausnehmungstiefe ist,
   wobei (i) die erste Enddicke in der zweiten Endausnehmungstiefe aufgenommen wird und (ii) die zweite Enddicke in der ersten Endausnehmungstiefe aufgenommen wird, wenn die flache Matte (2) in eine im Wesentlichen kreisrunde Form gewickelt ist, so dass die flache Matte in einen Zylinder, der einen Innendurchmesser aufweist, umgewandelt wird.

6. Antimikrobielles kolloidales Produkt nach Anspruch 5, worin eine Summe der Dicken der ersten Enddicke und der zweiten Enddicke ungefähr der Dicke einer flachen Matte entspricht.

7. Antimikrobielles kolloidales Produkt nach Anspruch 5, worin die flache Matte (2) ferner Anbringungsmechanismen umfasst, die an einer Ausnehmungsoberfläche des ersten Endes und einer Ausnehmungsoberfläche des zweiten Endes befestigt sind, worin der Anbringungsmechanismus des ersten Endes mit dem Anbringungsmechanismus des zweiten Endes zusammenwirkt, um das erste Ende und das zweite Ende zusammenzuhalten, und bevorzugt, worin die Anbringungsmechanismen aus einer Gruppe bestehend aus Klettverschluss, Klebstoff, Mutter/Steck-Einrastelementen und Klemmen ausgewählt werden.

8. Antimikrobielles kolloidales Produkt nach Anspruch 7, ferner umfassend einen Einsatz mit einem Außendurchmesser, der im Wesentlichen gleich dem inneren Zylinderdurchmesser ist, wobei die flache Matte (2) um den Einsatz herum gewickelt werden kann und die Anbringungsmechanismen in Eingriff stehen, um den Einsatz innerhalb der flachen Matte zu umschließen.

9. Antimikrobielles kolloidales Produkt nach Anspruch 1, worin das antimikrobielle kolloidale Produkt einen festen monolithischen Zylinder ohne einen inneren Zylinderdurchmesser umfasst, der eine Außenfläche mit einer Mehrzahl von nicht-halbkugelförmigen sphärischen Kappenvorsprüngen, die in Reihen auf der Außenfläche angeordnet sind, aufweist.

**10.** Antimikrobielles kolloidales Produkt nach Anspruch 1, worin das antimikrobielle kolloidale Produkt einen Block ohne eine Mehrzahl von in Reihen angeordneten halbkreisförmigen Vorsprüngen umfasst.

**11.** Antimikrobielles kolloidales Produkt nach Anspruch 3, ferner umfassend ein keilförmiges, aus dem gelatinösen Material hergestelltes Übungsgerät.

**12.** Antimikrobielles kolloidales Produkt nach Anspruch 1, worin das antimikrobielle kolloidale Produkt Wärme erzeugen kann, und bevorzugt, worin das antimikrobielle kolloidale Produkt in der Mikrowelle erwärmt werden kann, und/oder worin das antimikrobielle kolloidale Produkt von Wechsel- oder Gleichstromquellen gespeiste Induktionsheizelemente umfasst.

**13.** Antimikrobielles kolloidales Produkt nach Anspruch 12, worin die Induktionsheizelemente im gelatinösen Material eingebettet sind; ODER
worin die Induktionsheizelemente an einer Außenfläche des antimikrobiellen kolloidalen Produkts angebracht sind.

**14.** Antimikrobielles kolloidales Produkt nach Anspruch 1, worin das antimikrobielle kolloidale Produkt Kälte erzeugen kann, bevorzugt, worin das antimikrobielle kolloidale Produkt auf mehr als den Gefrierpunkt des Gelmaterials abgekühlt werden kann, so dass die Eigenschaften von Formbarkeit und Dämpfung immer noch vorliegen, und/oder worin das antimikrobielle kolloidale Produkt in einen Kühlschrank oder eine Gefriertruhe gegeben werden kann, um eine erwünschte Kühltemperatur zu erzielen, und/oder
worin das antimikrobielle kolloidale Produkt aus einer aus Gruppe ausgewählt wird, die aus beschichteten Polymerplatten, Polymerschalen, Polymerschaum und Polymermatten besteht.

**15.** Antimikrobielles kolloidales Produkt nach Anspruch 1, worin das antimikrobielle kolloidale Produkt eine Schuheinlage, eine Badematte, ein Duschvorhang, eine Duschauskleidung, eine Schubladenauskleidung, eine Polymerplatte, ein polyesterbeschichteter Papierstoff, eine Taschen- und Gepäckauskleidung, eine Schale oder ein Platzdeckchen ist.

**Revendications**

**1.** Produit colloïdal antimicrobien comprenant un matériau gélatineux avec un additif à base d'argent ou d'or colloïdal suspendu dans le matériau gélatineux, dans lequel la concentration d'additif à base d'argent ou d'or colloïdal antimicrobien est comprise entre environ 200 et environ 2000 PPM et le matériau gélatineux comprend :

un diisocyanate de diphényle méthylène polymère (MDI) à 100% ; et
du triol de polyéther à 100% de poids moléculaire (Mw) 265 ;
dans lequel un rapport du diisocyanate de diphényle méthylène polymère et du triol de polyéther est environ 1:1 et le produit colloïdal antimicrobien a une dureté Shore D d'environ 80.

**2.** Produit colloïdal antimicrobien selon la revendication 1, dans lequel le produit colloïdal antimicrobien comprend une natte plate ayant une surface supérieure lisse.

**3.** Produit colloïdal antimicrobien selon la revendication 1, dans lequel le produit colloïdal antimicrobien comprend une natte plate ayant une surface supérieure avec une pluralité de saillies de calottes sphériques non hémisphériques agencées en rangées sur la surface supérieure.

**4.** Produit colloïdal antimicrobien selon la revendication 3, dans lequel chaque saillie de calotte sphérique non hémisphérique a une section de base carrée.

**5.** Produit colloïdal antimicrobien selon la revendication 3, dans lequel la natte plate (2) comprend en outre :

une première extrémité ayant une première découpe d'extrémité avec une première profondeur de découpe d'extrémité le long d'une largeur d'une surface inférieure de la natte plate (2), dans lequel la première extrémité inclut une première épaisseur d'extrémité ; et
une deuxième extrémité qui est opposée à la première extrémité, dans lequel la deuxième extrémité inclut une deuxième découpe d'extrémité avec une deuxième profondeur de découpe d'extrémité le long de la largeur de la surface supérieure de la natte plate, dans lequel la deuxième extrémité inclut une deuxième épaisseur d'extrémité,

dans lequel (i) la première épaisseur d'extrémité est sensiblement égale à la deuxième profondeur de découpe d'extrémité et (ii) la deuxième épaisseur d'extrémité est sensiblement égale à la première profondeur de découpe d'extrémité,

grâce à quoi (i) la première épaisseur d'extrémité est reçue dans la deuxième profondeur de découpe d'extrémité et (ii) la deuxième épaisseur d'extrémité est reçue dans la première profondeur de découpe d'extrémité quand la natte plate (2) est enroulée en une forme sensiblement circulaire de sorte que la natte plate est transformée en un cylindre ayant un diamètre intérieur.

6. Produit colloïdal antimicrobien selon la revendication 5, dans lequel une somme des épaisseurs de la première épaisseur d'extrémité et de la deuxième épaisseur d'extrémité est approximativement équivalente à une épaisseur de natte plate.

7. Produit colloïdal antimicrobien selon la revendication 5, dans lequel la natte plate (2) comprend en outre des mécanismes de fixation fixés à une surface de découpe de la première extrémité et une surface de découpe de la deuxième extrémité, dans lequel le premier mécanisme de fixation d'extrémité coopère avec la deuxième mécanisme de fixation d'extrémité pour maintenir la première extrémité et la deuxième extrémité ensemble, et de préférence, dans lequel les mécanismes de fixation sont sélectionnés dans un groupe constitué de crochet/boucle, adhésif, pressions male/femelle et pinces.

8. Produit colloïdal antimicrobien selon la revendication 7, comprenant en outre un insert ayant un diamètre extérieur sensiblement égal au diamètre de cylindre intérieur, grâce à quoi la natte plate (2) peut être enroulée autour de l'insert et les mécanismes de fixation sont enclenchés pour enfermer l'insert dans la natte plate.

9. Produit colloïdal antimicrobien selon la revendication 1, dans lequel le produit colloïdal antimicrobien comprend un cylindre monolithique solide sans qu'un diamètre de cylindre intérieur ait une surface extérieure avec une pluralité de saillies de calottes sphériques non hémisphériques agencées en rangées sur la surface extérieure.

10. Produit colloïdal antimicrobien selon la revendication 1, dans lequel le produit colloïdal antimicrobien comprend un bloc sans pluralité de saillies semi-circulaires agencées en rangées.

11. Produit colloïdal antimicrobien selon la revendication 3, comprenant en outre un dispositif d'exercice en forme de coin fait du matériau gélatineux.

12. Produit colloïdal antimicrobien selon la revendication 1, dans lequel le produit colloïdal antimicrobien peut générer de la chaleur, et de préférence dans lequel le produit colloïdal antimicrobien peut être mis dans un four à micro-ondes, et/ou dans lequel le produit colloïdal antimicrobien comprend des éléments de chauffage par induction alimentés par des sources en CC ou CA.

13. Produit colloïdal antimicrobien selon la revendication 12, dans lequel les éléments de chauffage par induction sont intégrés dans le matériau gélatineux ; ou dans lequel les éléments de chauffage par induction sont assujettis à une surface extérieure du produit colloïdal antimicrobien.

14. Produit colloïdal antimicrobien selon la revendication 1, dans lequel le produit colloïdal antimicrobien peut générer du froid, de préférence dans lequel le produit colloïdal antimicrobien peut être refroidi au-delà du point de congélation du matériau en gel de telle sorte que les propriétés de malléabilité et d'amortissement sont encore présentes, et/ou dans lequel le produit colloïdal antimicrobien peut être placé dans un réfrigérateur ou un congélateur afin d'obtenir une température de refroidissement voulue, et/ou dans lequel le produit colloïdal antimicrobien est sélectionné dans un groupe constitué de feuilles polymères enduites, plateaux polymères, mousse polymère, et tapis polymères.

15. Produit colloïdal antimicrobien selon la revendication 1, dans lequel le produit colloïdal antimicrobien est un insert de chaussure, un tapis de bain, un rideau de douche, un revêtement de douche, une garniture de tiroir, une feuille polymère, un papier d'impression revêtu de polyester, un revêtement de sac et de bagage, un plateau ou un set de table.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 14

Fig. 13

66

Fig. 15A

66

Fig. 15B

Fig. 16A

Fig. 16B

70

6

8

Fig. 17

Fig. 18A

Fig. 18B

Fig. 19

Fig. 20A

Fig. 20B

104

X2

Y2

Fig. 21a

104

Fig. 21B

106

X3

Y3

Fig. 22A

106

Fig. 22B

Fig. 23A

Fig. 23B

Y5

110

X5

Fig. 24A

110

Fig. 24B

EP 2 654 431 B1

114

Y6

112

X6

Fig. 25A

Fig. 25B

Fig. 25C

Fig. 25D

EP 2 654 431 B1

Fig. 26A

Fig. 26B

118

X8

Y8

Fig. 27A

118

Fig. 27B

120

X9

Y9

Fig. 28A

122

Y10

X10

Fig. 28B

120

Fig. 28C

124

X11

Y11

Fig. 29A

124

Fig. 29B

Fig. 30A

Fig. 30B

Fig. 30C

Fig. 30D

Fig. 31A

Fig. 31B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007224288 A

- KR 100919137